(19) Europäisches Patentamt
European Patent Office
Office européen des brevets

(11) Numéro de publication : **0 317 584 B1**

# (12) FASCICULE DE BREVET EUROPEEN

(45) Date de publication du fascicule du brevet :
**20.03.91 Bulletin 91/12**

(51) Int. Cl.$^5$ : **B27B 19/04, B23D 51/08**

(21) Numéro de dépôt : **88904198.4**

(22) Date de dépôt : **20.05.88**

(86) Numéro de dépôt international :
**PCT/CH88/00096**

(87) Numéro de publication internationale :
**WO 88/09249 01.12.88 Gazette 88/26**

## (54) MACHINE-OUTIL.

(30) Priorité : 22.05.87 CH 1971/87
20.08.87 CH 3203/87

(43) Date de publication de la demande :
**31.05.89 Bulletin 89/22**

(45) Mention de la délivrance du brevet :
**20.03.91 Bulletin 91/12**

(84) Etats contractants désignés :
**AT DE FR GB IT SE**

(56) Documents cités :
**EP-A- 0 130 936
DE-A- 2 628 919
GB-A- 6 556
US-A- 1 467 720**

(73) Titulaire : **MEFINA S.A.
3, boulevard de Pérolles
CH-1701 Fribourg (CH)**

(72) Inventeur : **PLOMB, Francis
64, avenue du Lignon
CH-1219 Le Lignon (CH)**

(74) Mandataire : **Ardin, Pierre et al
PIERRE ARDIN & CIE 22, rue du Mont-Blanc
CH-1201 Genève (CH)**

EP 0 317 584 B1

Jouve, 18, rue Saint-Denis, 75001 PARIS

## Description

l'invention concerne une machine-outil comprenant un bâti creux présentant un montant latéral reliant un bras supérieur horizontal et un bras inférieur horizontal, les extrémités libres de ces bras étant pourvues chacune d'éléments de fixation d'une extrémité d'une lame de scie à découper et destinés à donner à cette lame un mouvement de va-et-vient longitudinal, un desdits éléments étant entraîné dans un mouvement de va-et-vient par un moteur logé dans le bâti, les deux éléments étant reliés l'un à l'autre par un lien fexible passant sur des poulies de renvoi et transmettant les mouvements de l'élément entraîné par le moteur à l'autre élément pour lui fournir une force de rappel de la lame de scie. Une machine-outil de ce genre est décrite par exemple dans le brevet USA N° 1.467.720.

Le brevet suisse N° 654.241 décrit une machine-outil universelle reprenant les particularités précitées, mais permettant d'autres opérations d'usinage, telles que le perçage, le sciage à l'aide d'une scie sauteuse ou d'une scie circulaire, le fraisage, le ponçage, le meulage, etc.

Lorsque la scie à découper n'est pas utilisée, l'élément de rappel de la lame de scie occupe inutilement une place dont on pourrait bénéficier pour autre chose et le but de l'invention est de permettre de libérer cette place.

A cet effet, la machine-outil faisant l'objet de l'invention est caractérisée en ce que le lien flexible passe sur un tendeur soumis à une action de rappel élastique, afin de ramener en position rétractée, lorsque la lame de scie est enlevée, celui des éléments de fixation de la lame de scie qui n'est pas entraîné par le moteur.

Les dessins annexés représentent schématiquement et à titre d'exemple une forme d'exécution et une variante de la machine-outil faisant l'objet de l'invention. Ces dessins ne montrent toutefois que les particularités propres à la présente invention et, pour se faire une idée complète de la machine, on aura intérêt à se reporter au brevet suisse cité plus haut.

La figure 1 est une vue en coupe partielle en élévation de cette forme d'exécution.

La figure 2 montre une partie du mécanisme d'entraînement de la lame de scie.

Les figures 3 et 4 montrent à plus grande échelle un dispositif de liaison auquel la lame de scie est fixée par ses extrémités.

Les figures 5 et 6 montrent plus en détail les pièces de fixation de la lame de scie à découper.

La figure 7 montre une variante d'une partie du mécanisme

La figure 8 montre une autre variante du mécanisme représenté à la figure 7.

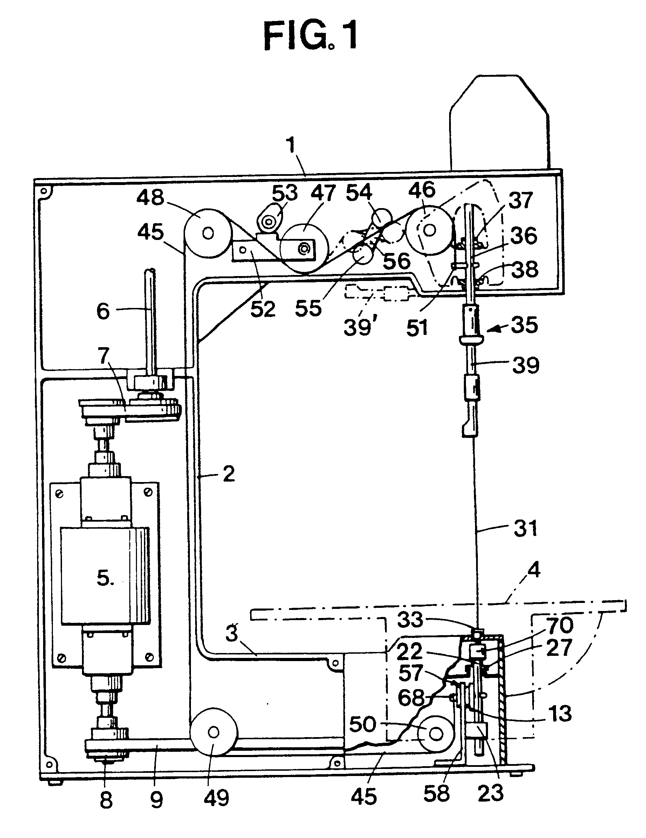

La machine représentée à la figure 1 comprend un bâti formé par un bras supérieur 1, un montant 2 et un bras inférieur 3 sur lequel est monté un plateau de travail 4, représenté en trait mixte. Le montant 2 abrite un moteur électrique 5 assurant l'entraînement des divers outils qui peuvent être actionnés par cette machine. Ainsi, celle-ci peut comporter une broche rotative pour constituer une perceuse, comme cela est représenté dans le brevet suisse N° 654.241. Cette broche n'est pas illustrée au dessin, car elle ne fait pas partie de la présente invention. On a seulement esquissé une partie de l'entraînement de cette broche, à savoir un arbre 6, entraîné par une courroie 7 à partir du moteur 5.

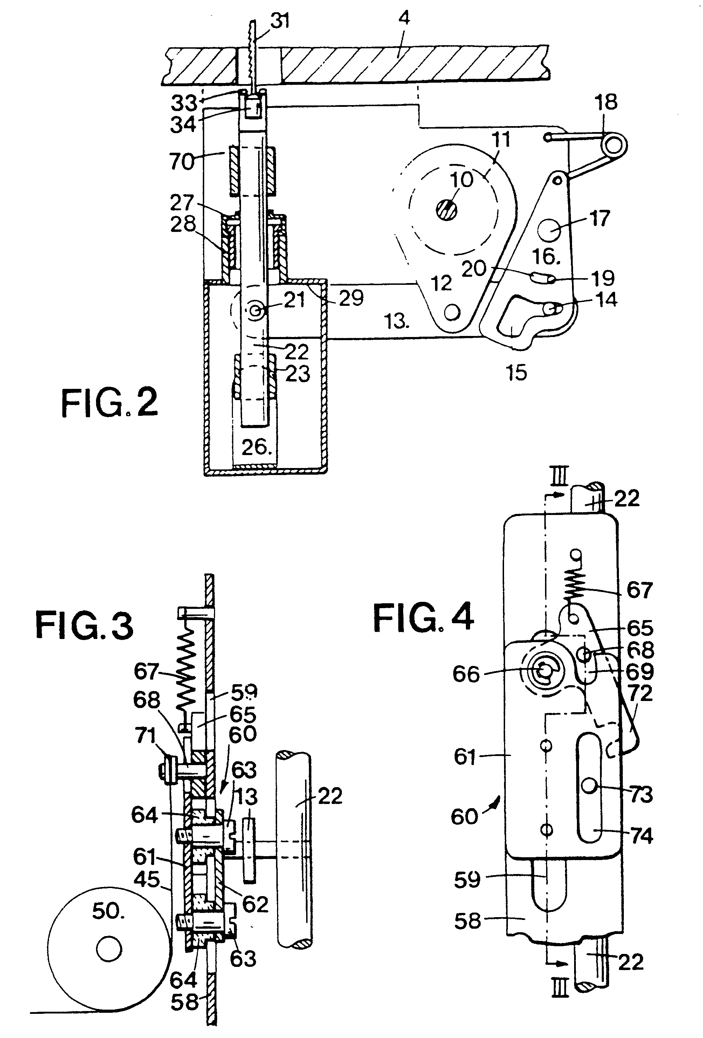

L'extrémité inférieure de l'arbre du moteur 5 porte une poulie 8, sur laquelle passe une courroie 9 pour entraîner les outils qui peuvent être fixés à des éléments du bras inférieur 3. Cette courroie 9 entraîne un arbre 10 horizontal, comme montré à la figure 2, par exemple par l'intermédiaire d'un engrenage de renvoi bien connu en lui-même et qui n'a donc pas été représenté.

L'arbre 10, visible à la figure 2, fait partie d'un mécanisme destiné à imprimer un mouvement de va-et-vient à une scie à découper. A cet effet, il porte un excentrique 11 sur lequel est engagé le palier d'une bielle 12 dont le pied est articulé sur un levier 13 portant un pivot 14, engagé dans un évidement 15 d'une pièce de commande 16. Cette dernière peut pivoter sur un téton 17 et est soumise à l'action d'un ressort sautant 18 qui la maintient dans l'une ou l'autre de ses positions, qui sont déterminées par la butée d'un doigt 19 contre une extrémité ou l'autre d'une fente 20 prévue dans la pièce 16.

Dans la position représentée à la figure 2, le pivot 14 du levier 13 est engagé dans une partie étroite de l'évidement 15, de sorte qu'il est retenu verticalement et que la rotation de l'excentrique 11 provoque un mouvement oscillant du levier 13 autour du pivot 14. Lorsque la pièce 16 est amenée dans son autre position, le pivot 14 du levier 13 se trouve dans la partie large de l'évidement 15 et ne peut donc plus prendre appui sur la pièce 16. De ce fait, les oscillations du levier 13 se font autour de l'extrémité gauche de ce levier qui est articulé en 21 sur une tige 22 pouvant coulisser verticalement. Cette tige 22 reste donc immobile lorsque le pivot 14 se trouve dans la partie large de l'évidement 15 de la pièce 16.

La tige 22 est montée coulissante, à sa partie inférieure, dans une douille 23, et à sa partie supérieure dans une douille 70.

la tige 22 traverse encore un manchon 27 en matière souple, monté sur un embout 28, prévu sur une paroi 29, ceci afin d'empêcher que la sciure produite lors du travail de la machine ne pénètre dans la partie inférieure du mécanisme d'entraînement de la tige 22. A sa partie supérieure, la tige 22 porte un crochet fendu 33 sous lequel on peut engager une masselotte 34 faisant partie de la lame de scie 31.

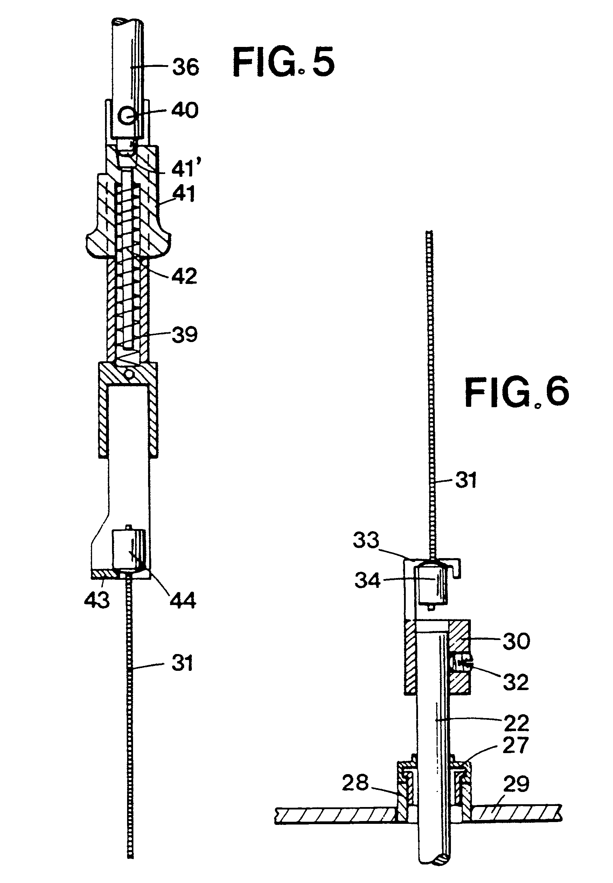

Dans le bras supérieur 1 se trouve un second élément 35 de fixation de la lame de scie par son extrémité supérieure. Cet élément comprend une tige 36 coulissant dans deux paliers 37 et 38. L'extrémité inférieure d'une pièce 39, articulée sur la tige 36, présente une partie d'accrochage formant également un crochet fendu 43 (figure 5) pour retenir la masselotte qui est solidaire de l'extrémité supérieur de la lame de scie 31. Grâce à cette articulation, la pièce 39 peut être basculée dans sa position 39'de non utilisation représentée en trait mixte à la figure 1.

En référence à la figure 1, on voit que l'élément supérieur 35 est relié à l'élément de fixation inférieur 22 par un organe souple 45 qui est réalisé sous la forme d'un ruban métallique passant sur des poulies de renvoi 46, 47, 48, 49 et 50. Ce ruban métallique 45 est fixé à une cheville transversale 51, solidaire de la tige 36. Dans le bras inférieur 3, l'autre extrémité du ruban métallique 45 est fixée à une cheville 68 d'un dispositif de liaison 57 coopérant avec la tige 22. De cette façon, on voit qu'un mouvement de la tige 22 dirigé vers le haut provoque un mouvement de même direction et de même amplitude de la tige 36.

Il y a lieu de remarquer que la poulie 47 est montée sur un bras pivotant 52 coopérant avec une came 53, reliée à un bouton de commande non représenté. Par une rotation de cette came 53, il est possible de modifier la longueur du chemin du ruban 45 ainsi que la tension de ce ruban, ceci après avoir mis en place la lame de scie 31. Le ruban 45 passe encore sur un tendeur formé par deux galets 54 et 55 montés sur un levier 56 qui est soumis à l'action d'un ressort non représenté. Lorsqu'on enlève la lame 31, par exemple pour utiliser un autre outil prévu sur la machine, le levier 56 pivote et les galets passent dans la position illustrée en trait mixte. Ceci rallonge le chemin du ruban 45 et fait remonter la tige 36 à l'intérieur du bras 1.

Il est possible, comme décrit dans le brevet suisse N° 654.241, de fixer sur la tige 22 une scie sauteuse au lieu de la lame de scie à découper 31. Dans ce cas, la pièce 39 du bras supérieur 1 reste immobile et il est avantageux de désaccoupler le ruban 45 de la tige 22, pour éviter que le ruban ne soit soumis à des tractions répétées qui feraient osciller continuellement le levier 56. Le désaccouplement est réalisé par le dispositif 57 qui est représenté plus en détail aux figures 3 et 4.

Ce dispositif comprend un guide vertical 58 fixé sur le fond du bras inférieur 3 du bâti. Ce guide présente une fente 59 permettant le coulissement d'une pièce 60 constituée de plusieurs parties. Cette pièce coulissante comprend deux plaques 61 et 62, reliées par deux vis à portée 63, traversant deux entretoises 64 en résine synthétique. Ces entretoises forment coulisseau et peuvent se déplacer librement le long de la fente 59.

La plaque 61 porte un levier 65, articulé en 66, et soumis à l'action d'un ressort de rappel 67. Ce levier porte la cheville 68, qui s'engage dans une encoche 69 de la plaque 61. Comme le montre la figure 3, l'extrémité du lien flexible 45 est fixée sur ce téton 68 au moyen d'une pièce 71. Le levier 65 présente une extrémité 72 formant crochet et destiné à coopérer avec une saillie latérale 73 constituée par une barrette solidaire de la tige 22. Cette barrette 73 peut se déplacer dans une fente 74 de la plaque 61.

Dans la position illustrée à la figure 4, le dispositif de liaison est en position désaccouplée, car le ruban 45 est détendu et permet donc au ressort 67 de ramener le levier 65 dans la position illustrée. Lorsqu'on fixe une lame de scie 31 entre la tige 22 et la pièce supérieure 39 on provoque une tension du ruban 45 qui, par l'intermédiaire du levier 65, déplace la pièce coulissante 60 jusqu'à ce que l'extrémité supérieure de la fente 74 vienne buter contre la barrette 73. Lorsque la pièce coulissante 60 est bloquée dans sa position, une augmentation de la traction du ruban 45 fait pivoter le levier 65 contre l'action du ressort 67 et le crochet de l'extrémité 72 de ce levier vient s'engager sur la barrette 73, de sorte que la pièce coulissante 60 est accouplée mécaniquement à la tige 22, pour permettre l'utilisation de la scie à découper 31.

Dans cette position, la cheville 68 vient buter contre le fond de l'encoche 69, ce qui évite que le levier 65 n'exerce une poussée latérale sur la barrette 73.

Il est clair que lorsqu'on enlève la lame de scie 31, la traction du ruban 45 disparaît et le ressort 67 ramène le levier 65 dans la position illustrée à la figure 4, interrompant ainsi la liaison entre la pièce 60 et la tige 22.

Comme le montre mieux la figure 5, l'articulation de la partie 39 se fait sur un pivot transversal 40 de la tige 36 et cette articulation peut être bloquée en position de travail grâce à un verrou coulissant 41 soumis à l'action d'un ressort interne 42 pour le maintenir en prise avec un ergot 41' solidaire de la tige 36. l'extrémité inférieure de la pièce 39 présente une partie d'accrochage 43 formant également un crochet fendu pour retenir la masselotte 44 qui est solidaire de l'extrémité supérieure de la lame de scie 31. Il est visible aux figures 5 et 6 que les masselottes 34 et 44 aux extrémités de la lame de scie 31 présentent chacune une portion sphérique destinée à prendre appui contre la portion interne du crochet 33, respectivement 43, cette portion étant de forme complémentaire.

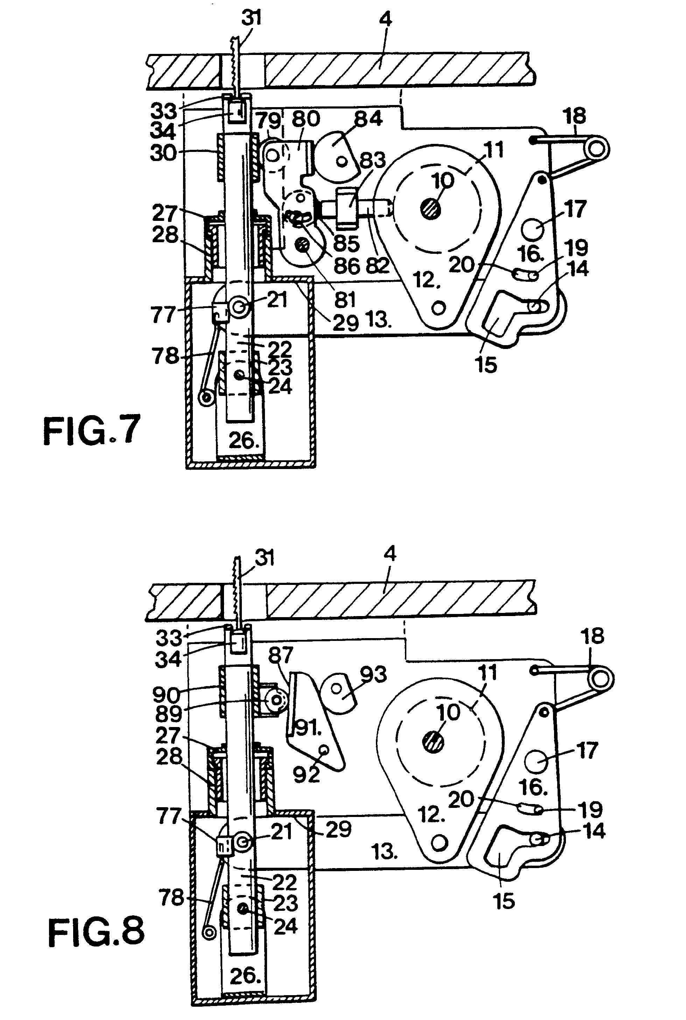

La figure 7 illustre une variante d'exécution dans laquelle le mécanisme de commande du mouvement de va-et-vient de la scie 31 a été complété pour imprimer des déplacements périodiques transversaux au crochet 33 par rapport à ses mouvements longitudinaux.

Dans cette variante, la tige 22 est pressée vers la droite par un patin 77 soumis à l'action d'un ressort 78, de façon à presser la pièce 30 contre un galet 79, fixé sur un bras 80 pivotant en 81 sur une partie du bâti de la machine. Ce bras 80 coopère avec un poussoir 82, soumis à l'action de l'excentrique 11 et coulissant dans un palier linéaire 83, de façon à communiquer un déplacement transversal de la tige 22 pendant ses mouvements de va-et-vient verticaux, ce qui permet de dégager les dents de la lame 31 lors du mouvement de retour vers le haut et faciliter ainsi l'évacuation de la sciure.

Pour permettre le réglage de la position verticale de la lame, afin d'obtenir de bonnes conditions de fonctionnement, un élément de réglage est prévu entre le bras 80 et le poussoir 82 sous la forme d'un excentrique 85 dont la position peut être bloquée à l'aide d'une vis 86. D'autre part, une came excentrique 84 coopère avec le bras 80 pour limiter de façon réglable le déplacement de ce bras en direction du poussoir 82. Par la manoeuvre de cette came 84, il est ainsi possible de modifier l'amplitude du mouvement transversal.

Dans l'autre variante illustrée à la figure 8, la majorité des pièces correspondant à la forme d'exécution selon la figure 7 sont désignées par les mêmes chiffres de référence. l'obtention du déplacement latéral de la tige 22 est cependant obtenue par des moyens plus simples, constitués par une rampe 87 sur laquelle vient s'appuyer un galet 89 monté pivotant sur une pièce 90 qui remplace la pièce 30 de la figure 7. Cette rampe 87 est portée par un bras 91 articulé sur un pivot 92 et coopérant avec une came 93 dont les moyens de commande ne sont pas représentés. En faisant tourner la came 93 on fait pivoter le bras 91, de sorte que l'inclinaison de la rampe 87 par rapport à la tige 22 est modifiée, ce qui permet de faire varier l'ampleur du déplacement transversal de la tige 22. Lorsque la rampe 87 est parallèle à l'axe de la tige 22, on supprime tout déplacement transversal pendant le fonctionnement.

Comme cela est décrit dans le brevet suisse N° 654.241, la tige 22 pourrait aussi être équipée d'une lame rigide de scie sauteuse. Dans ce cas, il est évident que l'utilisation des mécanismes imprimant un mouvement transversal à la tige 22 est avantageux.

**Revendications**

1. Machine-outil comprenant un bâti creux présentant un montant latéral reliant un bras supérieur horizontal et un bras inférieur horizontal, les extrémités libres de ces bras étant pourvues chacune d'éléments de fixation d'une extrémité d'une lame de scie à découper et destinés à donner à cette lame un mouvement de va-et-vient longitudinal, un desdits éléments étant entraîné dans un mouvement de va-et-vient par un moteur logé dans le bâti, les deux éléments étant reliés l'un à l'autre par un lien flexible passant sur des poulies de renvoi et transmettant les mouvements de l'élément entraîné par le moteur à l'autre élément pour lui fournir une force de rappel de la lame de scie, **caractérisée** en ce que le lien flexible (45) passe sur un tendeur (56) soumis à une action de rappel élastique, afin de ramener en position rétractée, lorsque la lame de scie (31) est enlevée, celui des éléments de fixation (35) de la lame de scie qui n'est pas entraîné par le moteur (5).

2. Machine-outil selon la revendication 1, **caractérisée** par un organe de réglage (53) de la position d'au moins une (48) des poulies de renvoi, pour permettre de modifier la longueur du trajet du lien flexible (45) en fonction de la longueur de la lame de scie (31) utilisée et de régler en outre la tension exercée sur cette lame par ledit lien.

3. Machine-outil selon la revendication 1, **caractérisée** en ce que l'élément (35) fournissant la force de rappel est escamotable pour faciliter l'emploi d'autres organes pouvant équiper la machine.

4. Machine-outil selon l'une des revendications précédentes, **caractérisée** en ce que chacun des deux éléments de fixation est muni d'un crochet à fente (33, 43), la lame de scie étant engagée par chacune de ses extrémités dans ces crochets, cette lame comprenant à chaque extrémité une masselotte (34, 44) présentant une portion sphérique destinée à prendre appui contre la portion interne du crochet respectif pour relier la lame auxdits éléments.

5. Machine-outil selon l'une des revendications précédentes, **caractérisée** en ce que l'élément de fixation entraîné par le moteur coopère avec un mécanisme lui imprimant des déplacements périodiques transversaux par rapport à ses mouvements longitudinaux de va-et-vient.

6. Machine-outil selon l'une des revendications précédentes, **caractérisée** par un dispositif de liaison entre lesdits éléments de fixation, ce dispositif de liaison étant susceptible d'être désaccouplé.

7. Machine-outil selon la revendication 6, **caractérisée** en ce que le dispositif de liaison est placé entre l'élément entraîné par le moteur et le lien flexible.

8. Machine-outil selon l'une des revendications précédentes, **caractérisée** en ce que le lien flexible passant sur les poulies de renvoi est logé à l'intérieur du bâti creux.

9. Machine-outil selon la revendication 6 ou 7, **caractérisée** en ce que le dispositif de liaison présente un organe d'accouplement à l'élément entraîné par le moteur, cet organe étant sollicité en position désaccouplée par un ressort et en position accouplée sous l'effet d'une traction exercée par le lien flexible.

10. Machine-outil selon la revendication 9, **caractérisée** en ce que l'élément entraîné par le moteur présente une saillie latérale, le dispositif de liaison comprenant une pièce montée coulissante sur un guide, l'organe d'accouplement étant constitué par un levier monté pivotant sur la pièce coulissante et soumis à l'action d'un ressort accroché à une partie fixe de la machine, ce levier présentant une encoche destinée à s'engager sur ladite saillie, ainsi qu'un point d'amarrage pour le lien flexible.

## Ansprüche

1. Werkzeugmaschine, umfassend einen offenen Rahmen mit einem seitlichen Ständer, der einen oberen waagrechten Arm und einen unteren waagrechten Arm untereinander verbindet, wobei die freien Enden dieser Arme jeweils mit Elementen zum Befestigen eines Endes eines Sägeblattes versehen sind, die dazu vorgesehen sind, diesem Blatt eine Hin-und Herbewegung in Längsrichtung zu verleihen, wobei eines der Elemente durch einen in dem Rahmen vorgesehenen Motor in eine Hin-und Herbewegung versetzt wird und wobei die beiden Elemente über eine flexible Verbindung-untereinander verbunden sind, die über Umlenkrollen läuft und die Bewegungen des durch den Motor angetriebenen Elementes auf das andere Element überträgt, um eine Rückstellkraft für das Sägeblatt auf dieses Element zu übertragen, dadurch gekennzeichnet, daß die flexible Verbindung (45) über eine Spannvorrichtung (56) verläuft, die einer elastischen Rückstellwirkung unterworfen ist, um jenes Element (35) zum Befestigen des Sägeblattes, das nicht durch den Motor (5) angetrieben wird, wieder in die zurückgezogene Stellung zu bringen, wenn das Sägeblatt (31) angehoben ist.

2. Werkzeugmaschine nach Anspruch 1, gekennzeichnet durch ein Organ (53) zur Steuerung der Stellung von mindestens einer Umlenkrolle (48), um die Länge des Verlaufs der flexiblen Verbindung (45) in Funktion der Länge des verwendeten Sägeblattes (31) und außerdem die Einstellung der auf dieses Blatt durch die Verbindung ausgeübten Spannung zu ermöglichen.

3. Werkzeugmaschine nach Anspruch 1, dadurch gekennzeichnet, daß das die Rückstellkraft erzeugende Element (35) versenkbar ist, um den Einsatz anderer Organe zu vereinfachen, mit denen die Maschine ausgestattet werden kann.

4. Werkzeugmaschine nach einem der vorhergehenden Ansprüche, dadurch gekennzeichnet, daß jedes der beiden Elemente zur Befestigung mit einem geschlitzten Haken (33, 43) versehen ist, wobei das Sägeblatt über jedes seiner Enden in diese Haken eingreift und wobei das Blatt an jedem seiner Enden einen Kopf (34, 44) mit einem kugelförmigen Abschnitt umfaßt, der dazu vorgesehen ist, gegen den inneren Teil des entsprechenden Hakens aufzuliegen, um das Blatt mit den Elementen zu verbinden.

5. Werkzeugmaschine nach einem der vorhergehenden Ansprüche, dadurch gekennzeichnet, daß das von dem Motor angetriebene Element zur Befestigung mit einem Mechanismus zusammenwirkt, der periodische Versetzungen in Querrichtung im Verhältnis zu seinen Hin-und Herbewegungen in Längsrichtung auf letzteres überträgt.

6. Werkzeugmaschine nach einem der vorhergehenden Ansprüche, gekennzeichnet durch ein Verbindungselement zwischen den Elementen zur Befestigung, wobei dieses Verbindungselement abkoppelbar ist.

7. Werkzeugmaschine nach Anspruch 6, dadurch gekennzeichnet, daß die Verbindungsvorrichtung zwischen dem von dem Motor angetriebenen Element und der flexiblen Verbindung angeordnet ist.

8. Werkzeugmaschine nach einem der vorhergehenden Ansprüche, dadurch gekennzeichnet, daß die über die Umlenkrollen verlaufende flexible Verbindung im Inneren des offenen Rahmens gelagert ist.

9. Werkzeugmaschine nach Anspruch 6 oder 7, dadurch gekennzeichnet, daß die Verbindungsvorrichtung ein Organ zum Ankoppeln an das durch den Motor angetriebene Element aufweist, wobei dieses Organ in der abgekoppelten Stellung der Wirkung einer Feder und in der angekoppelten Stellung der Wirkung eines durch die flexible Verbindung ausgeübten Zuges unterworfen ist.

10. Werkzeugmaschine nach Anspruch 9, dadurch gekennzeichnet, daß das durch den Motor angetriebene Element einen seitlichen Vorsprung aufweist, wobei die Verbindungsvorrichtung einen gleitend auf einer Führung angeordneten Teil umfaßt und wobei das Kopplungsorgan durch einen drehend auf dem gleitenden Teil montierten Hebel gebildet wird und der Wirkung einer in einem ortsfesten Teil der Maschine eingehakten Feder unterworfen ist, wobei dieser Hebel eine Ausnehmung aufweist, die dazu vorgesehen ist, in den Vorsprung einzugreifen und als Verankerung der flexiblen Verbindung vorgesehen ist.

## Claims

1. A machine-tool comprising a hollow framework having a lateral upright connecting an upper horizontal arm and a lower horizontal arm, the free ends of these arms being each provided with attachment means for one end of the blade of a mechanical fret saw, and intended to impart to this blade a longitudinal reciprocating movement, one of the said attachment means being urged into a reciprocating movement by a motor housed in the framework, the two attachment means being connected to one another by a flexible connecting means passing over return pulleys and transmitting the movements of the elements driven by the motor to the other element, in order to impart thereto a return force of the saw blade, characterised in that the flexible connecting means (45) passes over a tension device (56) subject to an elastic return action, in order, when the saw blade (31) is removed, to bring into a retracted position that one of the attachment means (35) for the saw blade which is not driven by the motor (5).

2. A machine-tool according to Claim 1. characterised by an adjusting unit (53) for the position of at least one (48) of the return pulleys, in order to allow modification of the path length of the flexible connecting means (45) as a function of the length of the saw blade (31) used, and moreover to adjust the tension exerted on this blade by the said connecting means.

3. A machine-tool according to Claim 1, characterised in that the member (35) providing the return force is retractable in order to facilitate the use of other components with which the machine may be equipped.

4. A machine-tool according to one of the foregoing Claims, characterised in that each of the two attachment means is equipped with a split hook (33, 43), the saw blade being engaged by each of its ends in these hooks, this blade comprising at each end a riser (34, 44) having a spherical portion intended to rest against the internal portion of the respective hook in order to connect the blade to the said means.

5. A machine-tool according to one of the foregoing Claims, characterised in that the attachment means driven by the motor cooperates with a mechanism which imparts thereto periodic transverse movements relative to its longitudinal reciprocating movements.

6. A machine-tool according to one of the foregoing Claims, characterised by a connecting means between the said attachment means, this connecting means being capable of being uncoupled.

7. A machine-tool according to Claim 6, characterised in that the connecting means is placed between the member driven by the motor and the flexible connecting means.

8. A machine-tool according to one of the foregoing Claims, characterised in that the flexible connecting means, passing over return pulleys, is housed in the interior of the hollow framework.

9. A machine-tool according to Claim 6 or 7, characterised in that the connecting means has a member for coupling to the member driven by the motor, this member being urged into the uncoupled position by a spring, and into the coupled position under the action of traction exerted by the flexible connecting means.

10. A machine-tool according to Claim 9, characterised in that the element driven by the motor has a lateral projection, the connecting means having a part mounted to slide on a guide, the coupling member being constituted by a lever mounted to pivot on the sliding part, and subject to the action of a spring attached to a fixed part of the machine, this lever having a notch intended to engage on the said projection, as well as an anchoring point for the flexible connecting means.

# FIG. 1

FIG.2

FIG.3

FIG.4

FIG. 5

FIG. 6

FIG.7

FIG.8